(19) Europäisches Patentamt
European Patent Office
Office européen des brevets

(11) EP 3 318 663 A1

(12) # EUROPEAN PATENT APPLICATION
published in accordance with Art. 153(4) EPC

(43) Date of publication:
**09.05.2018 Bulletin 2018/19**

(21) Application number: **16817790.5**

(22) Date of filing: **22.06.2016**

(51) Int Cl.:
***D01F 6/70*** *(2006.01)*

(86) International application number:
**PCT/JP2016/068536**

(87) International publication number:
**WO 2017/002682 (05.01.2017 Gazette 2017/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **01.07.2015 JP 2015132560**

(71) Applicant: **TOYO TIRE & RUBBER CO., LTD.**
**Itami-shi**
**Hyogo 664-0847 (JP)**

(72) Inventor: **ISEKI,Seiji**
**Hyogo 6640847 (JP)**

(74) Representative: **Sajda, Wolf E.**
**Meissner Bolte Patentanwälte**
**Rechtsanwälte Partnerschaft mbB**
**Postfach 86 06 24**
**81633 München (DE)**

(54) **SINGLE FIBRE INCLUDING THERMALLY RESPONSIVE LIQUID-CRYSTAL ELASTOMER, FILAMENT YARN, AND FIBRE PRODUCT**

(57) The purpose of the present invention is to provide: a single fibre including a thermally responsive liquid-crystal elastomer which reversibly expands and contracts in response to heat; a filament yarn including said single fibre; and a fibre product using the single fibre or the filament yarn. This single fibre includes a thermally responsive liquid-crystal elastomer which reversibly expands and contracts using, as a boundary, a transition temperature (Ti) at which phase transition from a liquid-crystal phase to an isotropic phase or from the isotropic phase to the liquid-crystal phase occurs.

EP 3 318 663 A1

## Description

### TECHNICAL FIELD

The present invention relates to a single fibre including a thermally responsive liquid-crystal elastomer, a filament yarn, and a fibre product.

### BACKGROUND ART

Liquid-crystal polymer fibres (for example, liquid-crystal polyester fibres, etc.) are known as fibres having high strength and high elastic modulus, and many liquid-crystal polymer fibres have been developed so far (for example, Patent Documents 1 to 3).

These conventional liquid-crystal polymer fibres are not fibres which reversibly expand and contract in response to heat.

Meanwhile, pressure clothes such as medical elastic stockings, pressure shirts, pressure tights, and pressure socks have functions to strongly compress the body part from the outside, thereby making it easy for the blood to return to the heart to improve venous return, as well as have functions to reduce swelling or dullness, or impart a tightening effect.

Although the pressure clothes exhibit the above-mentioned functions by strongly compressing the body part, said clothes have a problem that it is difficult to wear because of their contraction.

### PRIOR ART DOCUMENTS

### PATENT DOCUMENTS

Patent Document 1: JP-A-2009-167584
Patent Document 2: JP-A-2010-84301
Patent Document 3: JP-A-2013-82804

### SUMMARY OF THE INVENTION

### PROBLEMS TO BE SOLVED BY THE INVENTION

The purpose of the present invention is to provide a single fibre including a thermally responsive liquid-crystal elastomer which reversibly expands and contracts in response to heat; a filament yarn including the single fibre; and a fibre product using the single fibre or the filament yarn.

### MEANS FOR SOLVING THE PROBLEMS

The inventors of the present invention have made extensive and intensive studies to solve the above problems, and, as a result, have found that the purpose of the present invention can be achieved by the following single fibre. The present invention has been completed based on this finding.

The present invention relates to a single fibre including a thermally responsive liquid-crystal elastomer which reversibly expands and contracts using, as a boundary, a transition temperature (Ti) at which phase transition from a liquid-crystal phase to an isotropic phase or from the isotropic phase to the liquid-crystal phase occurs.

The single fibre of the present invention is a fibre that reversibly expands and contracts using, as a boundary, the transition temperature (Ti) of the thermally responsive liquid-crystal elastomer as a starting material. Therefore, by using the single fibre, the fibre product can be contracted or expanded at a preset temperature.

It is preferable that the thermally responsive liquid-crystal elastomer is a thermally responsive liquid-crystal polyurethane elastomer obtained by reacting a liquid-crystal urethane compound obtained by reacting at least a mesogenic group-containing compound having an active hydrogen group, an alkylene oxide and/or a styrene oxide, and a diisocyanate compound, with a polyfunctional compound having a functionality of 3 or more which reacts with an active hydrogen group or an isocyanate group of the liquid- crystal urethane compound.

By adding an alkylene oxide and/or a styrene oxide to a mesogenic group-containing compound having an active hydrogen group, the thermal stability of the mesogenic group is lowered, thereby being able to lower the temperature range in which the liquid crystallinity of the liquid-crystal urethane compound is exhibited. The liquid-crystal urethane compound is one that is prepolymerized by reacting these starting materials with a diisocyanate compound. With use

of the liquid-crystal urethane compound, it is possible to produce a single fibre including a thermally responsive liquid-crystal polyurethane elastomer by liquid-crystal spinning without any solvent. In addition, by reaction-curing the liquid-crystal urethane compound in a state where liquid crystallinity is exhibited, it is possible to inhibit the crystallinity of a mesogen and prevent the formation of a crystal phase. Thereby, a single fibre having liquid crystallinity and rubber elasticity in a low temperature state can be obtained.

It is preferable that the mesogenic group-containing compound is a compound represented by the following general formula (1):

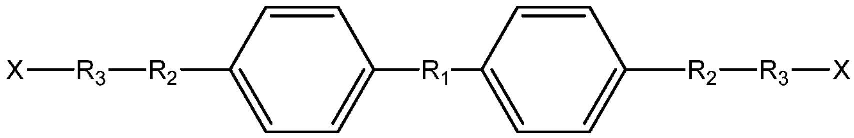
(1)

wherein X is an active hydrogen group, $R_1$ is a single bond, -N=N-, -CO-, -CO-O-, or -CH=N-, $R_2$ is a single bond or -O-, and $R_3$ is a single bond or an alkylene group having 1 to 20 carbon atoms, provided that the compound when $R_2$ is -O- and $R_3$ is a single bond is excluded.

In addition, it is preferable that the alkylene oxide is at least one member selected from the group consisting of ethylene oxide, propylene oxide, and butylene oxide.

In addition, it is preferable that 2 to 10 moles of the alkylene oxide and/or the styrene oxide add to 1 mole of the mesogenic group-containing compound. When the number of moles added is less than 2 moles, it becomes difficult to sufficiently lower the temperature range in which the liquid crystallinity of the liquid-crystal urethane compound is exhibited, and it tends to be difficult to produce a single fibre by liquid-crystal spinning. On the other hand, when the number of moles added exceeds 10 moles, the liquid-crystal urethane compound tends to fail to exhibit the liquid crystallinity.

The single fibre including a thermally responsive liquid-crystal polyurethane elastomer is obtained by liquid crystal spinning of a starting material composition for thermally responsive liquid-crystal polyurethane elastomers, said composition containing the liquid-crystal urethane compound and a polyfunctional compound having a functionality of 3 or more which reacts with an active hydrogen group or an isocyanate group of the liquid-crystal urethane compound. The resulting single fibre has liquid crystallinity and rubber elasticity at a low temperature state.

It is preferable that the thermally responsive liquid-crystal polyurethane elastomer does not have the melting point of a mesogen between the glass transition temperature (Tg) and the transition temperature (Ti), and a liquid crystallinity is exhibited between the Tg and Ti temperatures.

It is preferable that the transition temperature (Ti) of the thermally responsive liquid-crystal elastomer is from 0 to 100 °C.

In addition, when the single fibre of the present invention is used as a starting material for pressure clothes, the transition temperature (Ti) of the thermally responsive liquid-crystal elastomer is preferably from 20 to 35°C. Thereby, such pressure clothes are easily worn on the body part (e.g., arm, leg, waist, etc.), and it is possible to obtain pressure clothes that can contract by body temperatures and the like and can strongly press the part of the body after wearing.

The expansion and contraction rate of the single fibre can be adjusted to 102 to 300 % depending on the application of the fibre product.

The present invention also relates to a filament yarn including the single fibre, and a fibre product using the single fibre or the filament yarn.

The fibre product may be one in which the degree of expansion and contraction is varied for each part by using two or more kinds of single fibres or filament yarns having different expansion and contraction rates.

## EFFECT OF THE INVENTION

Since the single fibre of the present invention includes a thermally responsive liquid-crystal elastomer which reversibly expands and contracts in response to heat, it is possible to shrink or expand a fibre product at a preset temperature by using the single fibre. In particular, since the mesogenic group of the thermally responsive liquid-crystal polyurethane elastomer used in the present invention is oriented in a uniaxial direction, said polyurethane elastomer shows a characteristic response behavior such that when heating is applied to the elastomer, the degree of orientation of the mesogenic group decreases, so that the elastomer shrinks in the orientation direction, and when removing the heating, the degree of orientation of the mesogenic group increases, so that the elastomer extends in the orientation direction. Further, the thermally responsive liquid-crystal polyurethane elastomer is made of a liquid-crystal urethane compound as a starting material having a low temperature range in which liquid crystallinity is exhibited, and has a network structure by crosslinking. Therefore, the single fibre including the thermally responsive liquid-crystal polyurethane

elastomer has liquid crystallinity and rubber elasticity in a low temperature state (for example, room temperature, near body temperature).

MODE FOR CARRYING OUT THE INVENTION

The single fibre of the present invention includes a thermally responsive liquid-crystal elastomer which reversibly expands and contracts using, as a boundary, a transition temperature (Ti) at which phase transition from a liquid-crystal phase to an isotropic phase or from the isotropic phase to the liquid-crystal phase occurs.
Examples of the thermally responsive liquid-crystal elastomer include a liquid-crystal polyurethane elastomer, a liquid-crystal silicone elastomer, a liquid-crystal acrylate elastomer, a poly-N-substituted (meth) acrylamide (for example, poly-N-isopropyl acrylamide), a polyvinyl ether, and the like. As the thermally responsive liquid-crystal elastomer, it is preferable to use one having the transition temperature (Ti) in the range of from 0 to 100°C. In particular, it is preferable to use a liquid-crystal polyurethane elastomer in order to obtain a single fibre having liquid crystallinity and rubber elasticity in a low temperature state (for example, at room temperature, near body temperature).
The thermally responsive liquid-crystal polyurethane elastomer is not particularly limited as long as it has liquid crystallinity and rubber elasticity in a low temperature state. For example, the thermally responsive liquid-crystal polyurethane elastomer is preferably a liquid-crystal polyurethane elastomer obtained by reacting a liquid crystal urethane compound, which is obtained by reacting at least a mesogen group-containing compound having an active hydrogen group, an alkylene oxide and/or a styrene oxide, and a diisocyanate compound, with a polyfunctional compound having a functionality of 3 or more which reacts with an active hydrogen group or an isocyanate group of the liquid-crystal urethane compound.
The liquid-crystal urethane compound is one obtained by reacting a mesogenic group-containing compound having at least an active hydrogen group, an alkylene oxide and/or a styrene oxide, and a diisocyanate compound.
The mesogenic group-containing compound having an active hydrogen group is not particularly limited as long as it is a compound having an active hydrogen group and a mesogenic group, but said mesogenic group-containing compound is preferably a compound represented by the following general formula (1):

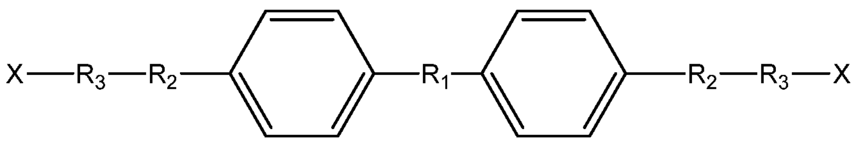

(1)

wherein X is an active hydrogen group, $R_1$ is a single bond, -N=N-, -CO-, -CO-O-, or -CH=N-, $R_2$ is a single bond or -O-, and $R_3$ is a single bond or an alkylene group having 1 to 20 carbon atoms, provided that the compound when $R_2$ is -O- and $R_3$ is a single bond is excluded.
Examples of X include OH, SH, $NH_2$, COOH, secondary amines, and the like.
In order to obtain a thermally responsive liquid-crystal polyurethane elastomer having a transition temperature (Ti) of 0 to 100 °C (preferably 20 °C to 35 °C) from a liquid-crystal phase to an isotropic phase or from the isotropic phase to the liquid-crystal phase, it is preferable to use a compound having a biphenyl skeleton ($R_1$ is a single bond) . When $R_3$ is an alkylene group, the number of carbon atoms is preferably 2 to 10.
The alkylene oxide to be added is not particularly limited, and examples thereof include ethylene oxide, propylene oxide, 1,2-butylene oxide, 2,3-butylene oxide, cyclohexene oxide, epichlorohydrin, epibromohydrin, methyl glycidyl ether, allyl glycidyl ether, and the like. The styrene oxide to be added may have a substituent such as an alkyl group, an alkoxyl group, or a halogen on the benzene ring.
In order to obtain a thermally responsive liquid-crystal polyurethane elastomer having a transition temperature (Ti) of 0 °C to 100 °C (preferably 20 °C to 35 °C) at which phase transition from a liquid-crystal phase to an isotropic phase or from the isotropic phase to the liquid-crystal phase occurs, it is preferable to use at least one oxide selected from the group consisting of ethylene oxide, propylene oxide, 1,2-butylene oxide, 2,3-butylene oxide, and styrene oxide.
The alkylene oxide and/or the styrene oxide is preferably added in an amount of 2 to 10 moles, more preferably 2 to 8 moles, with respect to 1 mole of the compound represented by the general formula (1).
The known compounds in the field of polyurethanes can be used as the diisocyanate compound without any particular limitation. The diisocyanate compounds include, for example, aromatic diisocyanates such as 2,4-toluene diisocyanate, 2, 6-toluene diisocyanate, 2,2'-diphenyl methane diisocyanate, 2,4'-diphenyl methane diisocyanate, 4,4'-diphenyl methane diisocyanate, 1,5-naphthalene diisocyanate, p-phenylene diisocyanate, m-phenylene diisocyanate, p-xylylene diisocyanate and m-xylylene diisocyanate, aliphatic diisocyanates such as ethylene diisocyanate, 2,2,4-trimethyl hexamethylene-1,6-diisocyanate, 2,4,4-trimethyl hexamethylene-1,6-diisocyanate and 1,6-hexamethylene diisocyanate, and cycloaliphatic diisocyanates such as 1,4-cyclohexane diisocyanate, 4,4'-dicyclohexyl methane diisocyanate, isophorone diisocyanate and norbornane diisocyanate. These may be used alone or as a mixture of two or more thereof.

The blending ratio of the diisocyanate compound is preferably 10 to 40 wt%, more preferably 15 to 30 wt%, with respect to all the starting materials of the liquid-crystal urethane compound. When the blending ratio of the diisocyanate compound is less than 10 wt%, an increase in molecular weight by the urethanization reaction becomes insufficient, so that there is a tendency that it becomes difficult to produce a single fibre including a thermally responsive liquid-crystal polyurethane elastomer by liquid-crystal spinning. On the other hand, when the blending ratio of the diisocyanate compound exceeds 40 wt%, the blending ratio of the mesogenic group-containing compound decreases, so that the liquid-crystal urethane compound tends to be difficult to exhibit the liquid crystallinity.

In order to adjust the molecular weight or viscosity of the liquid-crystal urethane compound, an isocyanate compound having a functionality of 3 or more may be blended. The isocyanate compound having a functionality of 3 or more is not particularly limited, and examples thereof include compounds described later.

The liquid-crystal urethane compound may be produced by reacting a starting material composition containing at least the mesogenic group-containing compound, the alkylene oxide and/or the styrene oxide, and the diisocyanate compound. Alternatively, the liquid-crystal urethane compound may be produced by reacting the mesogenic group-containing compound with the alkylene oxide and/or the styrene oxide to obtain an oxide-added mesogenic group-containing compound, and reacting the diisocyanate compound or the like with the oxide-added mesogenic group-containing compound.

The temperature at which the mesogenic group-containing compound is reacted with the alkylene oxide and/or the styrene oxide is preferably about 110 °C to 130 °C. If the reaction temperature is less than 110 °C, the reaction tends to be difficult to proceed. If the reaction temperature exceeds 130 °C, side reactions tend to occur, and it tends to become difficult to obtain the desired oxide-added mesogenic group-containing compounds having hydroxyl groups at both ends.

The transition temperature (Ti) from a liquid-crystal phase to an isotropic phase or from the isotropic phase to the liquid-crystal phase of the liquid-crystal urethane compound is preferably from 15 to 150 °C, more preferably from 25 to 125 °C.

The single fibre of the present invention can be produced by liquid-crystal spinning of the thermally responsive liquid-crystal elastomer. In the obtained single fibre, the molecular chain is highly oriented in the fibre axis direction.

The single fibre may contain, as a filler or an additive, for example, an inorganic compound, a reinforcing agent, a thickener, a releasing agent, a coupling agent, a flame retardant, a flameproofing agent, a pigment, a coloring agent, and the like.

The single fibre including the thermally responsive liquid-crystal polyurethane elastomer can be produced by liquid-crystal spinning a starting material composition for a thermally responsive liquid-crystal polyurethane elastomer, said composition containing the liquid-crystal urethane compound and a polyfunctional compound having a functionality of 3 or more which reacts with an active hydrogen group or an isocyanate group of the liquid-crystal urethane compound. The liquid-crystal urethane compound may be used singly or in combination of two or more kinds thereof. In addition, the starting material composition may contain a thermoplastic resin as a fibre starting material.

The polyfunctional compound is a starting material for introducing a crosslinking point into the thermally responsive liquid-crystal polyurethane elastomer to form a network structure and imparting rubber elasticity to the thermally responsive liquid-crystal polyurethane elastomer.

The polyfunctional compound is not particularly limited as long as it is a compound having 3 or more functional groups reactive with the active hydrogen group or the isocyanate group of the liquid-crystal urethane compound, and examples thereof include an isocyanate compound having a functionality of 3 or more, an active hydrogen group-containing compound having a functionality of 3 or more, and the like.

The isocyanate compounds having a functionality of 3 or more include, for example, triisocyanates (e.g., triphenylmethane triisocyanate, tris(isocyanatephenyl)thiophosphate, lysine ester triisocyanate, 1,3,6-hexamethylene triisocyanate, 1,6,11-undecane triisocyanate, 1,8-diisocyanate-4-isocyanate methyloctane, and bicycloheptane triisocyanate) and tetraisocyanates (e.g., tetraisocyanate silane). It may also be possible to use a polymerized diisocyanate. As used herein, the term 'polymerized diisocyanate' refers to any of polymerized isocyanate derivatives produced by addition of three or more molecules of diisocyanate, or refers to a mixture of the isocyanate derivatives. For example, the isocyanate derivative may be of (1) trimethylolpropane adduct type, (2) biuret type, (3) isocyanurate type, or the like. These may be used alone or in combination of two or more thereof.

Examples of the active hydrogen group-containing compound having a functionality of 3 or more include high molecular weight polyols (molecular weight of 400 or more) having 3 or more hydroxyl groups, such as polyether polyol, polyester polyol, polycarbonate polyol, and polyester polycarbonate polyol; low molecular weight polyols such as trimethylolpropane, glycerin, 1,2,6-hexanetriol, pentaerythritol, tetramethylolcyclohexane, methylglucoside, sorbitol, mannitol, dulcitol, sucrose, 2,2,6,6-tetrakis(hydroxymethyl)cyclohexanol, and triethanolamine; low molecular weight polyamines such as diethylenetriamine; and the like. These may be used singly or in combination of two or more kinds thereof.

The blending ratio of the polyfunctional compound is preferably 2 to 20 wt%, more preferably 4 to 10 wt%, with respect to all the starting materials of the thermally responsive liquid-crystal polyurethane elastomer. When the blending ratio of the polyfunctional compound is less than 2 wt%, memory of the orientation state after orientation of the mesogenic groups is lowered, so that reversible shape deformation (thermal responsiveness) tends to be lost. On the other hand, when the blending ratio of the polyfunctional compound exceeds 20 wt%, the crosslinking density becomes higher, so that the glass transition temperature rises and the temperature range in which the liquid crystallinity is exhibited becomes narrower.

Therefore, it tends to be difficult to produce a single fibre including a liquid-crystal polyurethane elastomer having thermal responsibility by liquid-crystal spinning. In addition, the polyurethane elastomer tends to be difficult to exhibit the liquid crystallinity.

In the case of liquid-crystal spinning with use of a starting material composition for thermally responsive liquid-crystal polyurethane elastomers, the viscosity of the liquid-crystal urethane compound in the temperature range where liquid crystallinity is exhibited is preferably from 10 to 5000 Pa·s, more preferably from 100 to 2000 Pa·s. When the viscosity is less than 10 Pa·s, the orientation state of the mesogenic group during spinning process tends to decrease due to relaxation, and when the viscosity exceeds 5000 Pa·s, such spinning becomes difficult, so that it tends to be difficult to highly orientate the mesogenic group. In addition, the temperature at the time of spinning is preferably near the transition temperature (Ti) of the liquid-crystal urethane compound.

Further, the draw ratio at the time of spinning is preferably about from 150 to 500 %. When the draw ratio is less than 150 %, it tends to be difficult to obtain a single fibre including a liquid-crystal polyurethane elastomer deformed by a thermal response. On the other hand, when the draw ratio exceeds 500 %, the single fibre including a thermally responsive liquid-crystal polyurethane elastomer tends to easily break at the time of spinning.

The filament yarn of the present invention is obtained by twisting a plurality of the above single fibres. Only one kind of single fibres may be used, or two or more kinds of single fibres having different transition temperatures (Ti) may be used in combination. When two or more kinds of single fibres differing in the transition temperatures (Ti) are used in combination, the shrinkage temperature of each single fibre is different from each other, so that the degree of tightening by fibre shrinkage based on temperature change can be gradually changed. In addition, the filament yarn may be obtained by twisting the single fibre and a general-purpose fibre.

The fibre product of the present invention is produced using the single fibre or the filament yarn. Examples of the fibre products include, but not limited to, clothing items (e.g. sportswear, underwear, innerwear, men's clothing, women's clothing, medical clothing, nursing care clothing, working wear, etc.), pressure clothes (e.g. elastic stockings for medical use, pressure shirts, pressure tights, pressure socks, etc.), footwear, bags, hats, gloves, socks, support bands, bandages, car seats, supporters, and the like. The single fibre or the filament yarn of the present invention is particularly useful as a fibre material for pressure clothes.

The fibre product may be one in which the degree of expansion and contraction is changed for each part by using two or more kinds of single fibres or filament yarns having different expansion and contraction rates. Thereby, an appropriate tightening function can be imparted to each part of the fibre product.

## EXAMPLES

Description will be given of the invention with examples, while the invention is not limited to description in the examples.

### Measurement and Evaluation Method

(Measurement of Glass Transition Temperature (Tg) of Liquid-crystal Urethane Compound and Thermally Responsive Liquid-crystal Polyurethane Elastomer, Melting Point (Tm) of Mesogen, and (Liquid-Crystal Phase)-to-(Isotropic Phase) Transition Temperature (Ti))

The Tg, Tm, and Ti were measured under the condition of 20 °C/min using a differential scanning calorimeter DSC (manufactured by Hitachi High-Tech Science Corp., trade name: X-DSC 7000).

### Measurement of Viscosity of Liquid-crystal Urethane Compound

The viscosity of the liquid-crystal urethane compound was measured using a capillary rheometer (trade name: SemiAutomatic Capillary Rheometer (SAS-2002), manufactured by Yasuda Seiki Seisakusho, Ltd.) in accordance with JIS K 7199 at 60°C and a shear rate of 1000 $sec^{-1}$.

Evaluation of Liquid Crystallinity

The presence or absence of liquid crystallinity of the liquid-crystal urethane compound and thermally responsive liquid-crystal polyurethane elastomer were evaluated by using a polarization microscope (manufactured by Nikon Corporation, trade name: LV-100POL) and a differential scanning calorimeter DSC (manufactured by Hitachi High-Tech Science Corp., trade name: X-DSC 7000) under the condition of 20 °C/min.

(Evaluation of Expansion and Contraction Rate)

The expansion and contraction rate was determined by measuring the length of the single fibre before and after the transition temperature (Ti), followed by calculation according to the following formula.

$$\text{Expansion and contraction rate (\%)} = (L1/L2) \times 100$$

L1: Fibre length at less than transition temperature (Ti)
L2: Fibre length at transition temperature (Ti) or more

For the sample of Examples, the fibre length at 10°C was adopted for L1 and the fibre length at 80°C was adopted for L2.

Measurement of Expansion and Contraction Force

The expansion and contraction force (tightening force) of a single fibre was determined by measuring the stress generated when the fibre length was varied before and after the transition temperature (Ti) with use of a tensile tester equipped with a thermostatic chamber. Specifically, a single fibre sample was set so as not to sag between the chucks in a tank where the temperature was controlled to 0°C, and the stress (kPa) generated when increasing the temperature above the transition temperature (Ti + 10°C) was measured.

Example 1

BH6 (500 g), KOH 19.0 g, and DMF 3000 ml were placed in a reaction vessel and mixed, then 5 equivalents of propylene oxide were added to BH6 (1 mole) . The mixture was reacted under pressurized conditions at 120°C for 2 hours. Thereafter, oxalic acid 15.0 g was added thereto to stop the addition reaction, and the salt was removed by suction filtration, after which DMF was further removed by distillation under reduced pressure to obtain the desired mesogenic diol A (which may contain a structural isomer). The reaction is shown below.

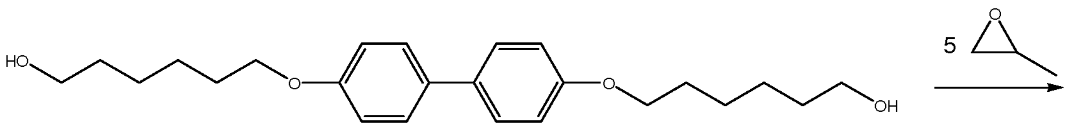


BH6

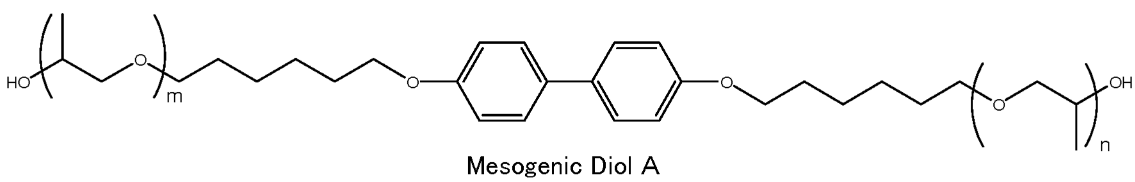

Mesogenic Diol A

(In the above formula, m + n = 5)

The mesogenic diol A 500 g, hexamethylene diisocyanate (HDI) 124 g, and a catalyst (TEDA-L33, manufactured by Tosoh Corporation) 5 g were mixed, and the mixture was allowed to react at 100°C for 2 hours to obtain a liquid-crystal urethane compound A1.

The liquid-crystal urethane compound A1 was melted in an extrusion molding machine and 2 parts by weight of HDI-based isocyanurate (SUMIDUR N3300 manufactured by Sumika Bayer Urethane Co., Ltd.) was added with respect to 98 parts by weight of the liquid-crystal urethane compound A1 using a side feeder. The mixture was extruded

into a fibre form while kneading, and wound while drawing (drawing temperature 10°C, draw ratio 200%) was applied, thereby to produce a single fibre composed of a thermally responsive liquid-crystal polyurethane elastomer. The wound single fibre was aged at 10°C for 24 hours.

Example 2

BH6 (500 g), KOH 19.0 g, and DMF 3000 ml were placed in a reaction vessel and mixed, then 4 equivalents of propylene oxide were added to BH6 (1 mole) . The mixture was reacted under pressurized conditions at 120°C for 2 hours. Thereafter, oxalic acid 15.0 g was added thereto to stop the addition reaction, and the salt was removed by suction filtration, after which DMF was further removed by distillation under reduced pressure to obtain the desired mesogenic diol B (which may contain a structural isomer).

The mesogenic diol B 500 g, hexamethylene diisocyanate (HDI) 137 g, and a catalyst (TEDA-L33, manufactured by Tosoh Corporation) 5 g were mixed, and the mixture was allowed to react at 100°C for 2 hours to obtain a liquid-crystal urethane compound B1.

The liquid-crystal urethane compound B1 was melted in an extrusion molding machine and 2 parts by weight of HDI-based isocyanurate (SUMIDUR N3300 manufactured by Sumika Bayer Urethane Co., Ltd.) was added with respect to 98 parts by weight of the liquid-crystal urethane compound B1 using a side feeder. The mixture was extruded into a fibre form while kneading, and wound while drawing (drawing temperature 25°C, draw ratio 200%) was applied, thereby to produce a single fibre composed of a thermally responsive liquid-crystal polyurethane elastomer. The wound single fibre was aged at 25°C for 24 hours.

Example 3

A single fibre was produced in the same manner as in Example 2, except that the draw ratio was changed to 300%.

Example 4

BH6 (500 g), KOH 19.0 g, and DMF 3000 ml were placed in a reaction vessel and mixed, then 3 equivalents of propylene oxide were added to BH6 (1 mole) . The mixture was reacted under pressurized conditions at 120°C for 2 hours. Thereafter, oxalic acid 15.0 g was added thereto to stop the addition reaction, and the salt was removed by suction filtration, after which DMF was further removed by distillation under reduced pressure to obtain the desired mesogenic diol C (which may contain a structural isomer).

The mesogenic diol C 500 g, hexamethylene diisocyanate (HDI) 113 g, and a catalyst (TEDA-L33, manufactured by Tosoh Corporation) 5 g were mixed, and the mixture was allowed to react at 100°C for 2 hours to obtain a liquid-crystal urethane compound C1.

The liquid-crystal urethane compound C1 was melted in an extrusion molding machine and 2 parts by weight of HDI-based isocyanurate (SUMIDUR N3300 manufactured by Sumika Bayer Urethane Co., Ltd.) was added with respect to 98 parts by weight of the liquid-crystal urethane compound C1 using a side feeder. The mixture was extruded into a fibre form while kneading, and wound while drawing (drawing temperature 25°C, draw ratio 200%) was applied, thereby to produce a single fibre composed of a thermally responsive liquid-crystal polyurethane elastomer. The wound single fibre was aged at 25 °C for 24 hours.

Example 5

A single fibre was produced in the same manner as in Example 4, except that the draw ratio was changed to 300%.

Example 6

BH4 (500 g), KOH 19.0 g, and DMF 3000 ml were placed in a reaction vessel and mixed, then 3 equivalents of propylene oxide were added to BH4 (1 mole) . The mixture was reacted under pressurized conditions at 120°C for 2 hours. Thereafter, oxalic acid 15.0 g was added thereto to stop the addition reaction, and the salt was removed by suction filtration, after which DMF was further removed by distillation under reduced pressure to obtain the desired mesogenic diol D (which may contain a structural isomer). The reaction is shown below.

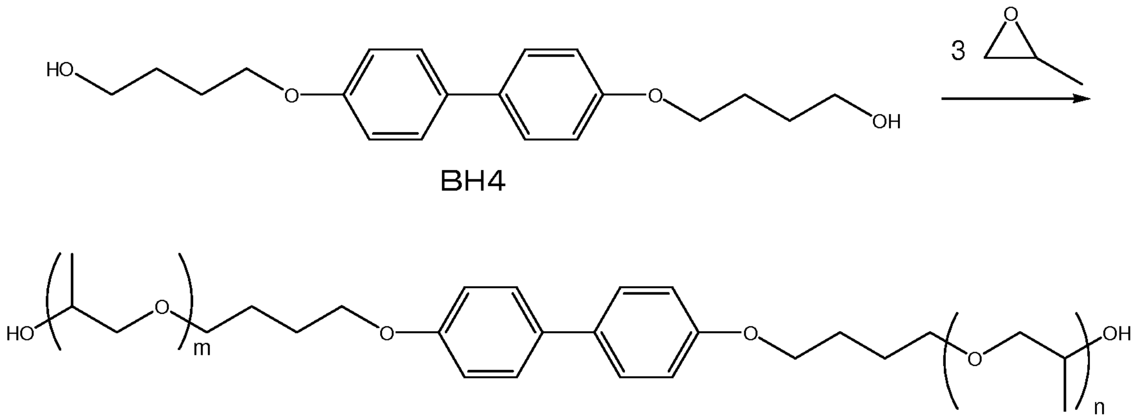


BH4

Mesogenic Diol D

(In the above formula, m + n = 3)

The mesogenic diol D 500 g, hexamethylene diisocyanate (HDI) 162 g, and a catalyst (TEDA-L33, manufactured by Tosoh Corporation) 5 g were mixed, and the mixture was allowed to react at 100°C for 2 hours to obtain a liquid-crystal urethane compound D1.

The liquid-crystal urethane compound D1 was melted in an extrusion molding machine and 2 parts by weight of HDI-based isocyanurate (SUMIDUR N3300 manufactured by Sumika Bayer Urethane Co., Ltd.) was added with respect to 98 parts by weight of the liquid-crystal urethane compound D1 using a side feeder. The mixture was extruded into a fibre form while kneading, and wound while drawing (drawing temperature 25°C, draw ratio 200%) was applied, thereby to produce a single fibre composed of a thermally responsive liquid-crystal polyurethane elastomer. The wound single fibre was aged at 25 °C for 24 hours.

**Table 1**

| | Characteristics of liquid-crystal urethane compound | | | | | Characteristics of single fibre containing thermally responsive liquid-crystal polyurethane elastomer | | | | | |
|---|---|---|---|---|---|---|---|---|---|---|---|
| | Glass transition temperature (Tg) | Melting point (Tm) | Transition temperature (Ti) | Liquid crystallinity | Viscosity at 60°C (Pa-s) | Glass transition temperature (Tg) | Melting point (Tm) | Transition temperature (Ti) | Liquid crystallinity | Expansion and contraction rate (%) | Expansion and contraction force (kPa) |
| Example 1 | -32 | - | 28 | Yes | 1300 | -14 | - | 15 | Yes | 111 | 170 |
| Example 2 | -19 | - | 41 | Yes | 1200 | 4 | - | 32 | Yes | 118 | 180 |
| Example 3 | -19 | - | 41 | Yes | 1200 | 4 | - | 32 | Yes | 135 | 250 |
| Example 4 | -10 | - | 53 | Yes | 1100 | 12 | - | 46 | Yes | 124 | 230 |
| Example 5 | -10 | - | 53 | Yes | 1100 | 12 | - | 46 | Yes | 175 | 520 |
| Example 6 | -2 | - | 77 | Yes | 1100 | 22 | - | 65 | Yes | 133 | 260 |

INDUSTRIAL APPLICABILITY

Since the single fibre or the filament yarn of the present invention has a function of reversibly expanding and contracting in response to heat, the single fibre or the filament yarn of the present invention can be used as a starting material for various fibre products imparting such a function.

## Claims

1. A single fibre including a thermally responsive liquid-crystal elastomer which reversibly expands and contracts using, as a boundary, a transition temperature (Ti) at which phase transition from a liquid-crystal phase to an isotropic phase or from the isotropic phase to the liquid-crystal phase occurs.

2. The single fibre according to claim 1,
wherein the thermally responsive liquid-crystal elastomer is a thermally responsive liquid-crystal polyurethane elastomer obtained by reacting a liquid-crystal urethane compound obtained by reacting at least a mesogenic group-containing compound having an active hydrogen group, an alkylene oxide and/or a styrene oxide, and a diisocyanate compound, with a polyfunctional compound having a functionality of 3 or more which reacts with an active hydrogen group or an isocyanate group of the liquid- crystal urethane compound.

3. The single fibre according to claim 2,
wherein the mesogenic group-containing compound is a compound represented by the following general formula (1):

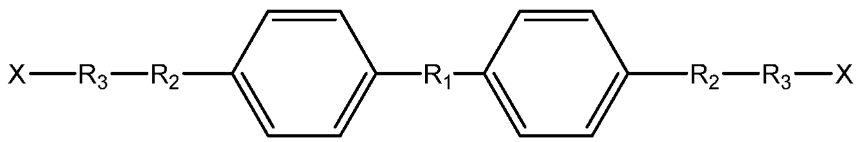

(1)

wherein X is an active hydrogen group, $R_1$ is a single bond, -N=N-, -CO-, -CO-O-, or -CH=N-, $R_2$ is a single bond or -O-, and $R_3$ is a single bond or an alkylene group having 1 to 20 carbon atoms, provided that the compound when $R_2$ is -O- and $R_3$ is a single bond is excluded.

4. The single fibre according to claim 2 or 3,
wherein the alkylene oxide is at least one member selected from the group consisting of ethylene oxide, propylene oxide, and butylene oxide.

5. The single fibre according to any one of claims 2 to 4,
wherein 2 to 10 moles of the alkylene oxide and/or the styrene oxide are added to 1 mole of the mesogenic group-containing compound.

6. The single fibre according to any one of claims 2 to 5,
wherein the thermally responsive liquid-crystal polyurethane elastomer does not have the melting point of a mesogen between the glass transition temperature (Tg) and the transition temperature (Ti), and a liquid crystallinity is exhibited between the Tg and Ti temperatures.

7. The single fibre according to any one of claims 1 to 6,
wherein the transition temperature (Ti) is from 0 to 100°C.

8. The single fibre according to any one of claims 1 to 6,
wherein the transition temperature (Ti) is from 20 °C to 35 °C.

9. The single fibre according to any one of claims 1 to 8,
wherein the expansion and contraction rate is from 102 to 300 %.

10. A filament yarn
comprising the single fibre according to any one of claims 1 to 9.

**11.** A fibre product using the single fibre according to any one of claims 1 to 9 or the filament yarn according to claim 10.

**12.** The fibre product according to claim 11,
wherein the degree of expansion and contraction is varied for each part by using two or more kinds of single fibres or filament yarns having different expansion and contraction rates.

**INTERNATIONAL SEARCH REPORT**

International application No. PCT/JP2016/068536

A. CLASSIFICATION OF SUBJECT MATTER
*D01F6/70*(2006.01)i

According to International Patent Classification (IPC) or to both national classification and IPC

B. FIELDS SEARCHED

Minimum documentation searched (classification system followed by classification symbols)
D01F1/00-6/96;9/00-9/04, C08G18/00-18/87;71/00-71/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2007-247074 A (Nissan Motor Co., Ltd.), 27 September 2007 (27.09.2007), claims; paragraphs [0009], [0012] to [0021]; examples (Family: none) | 1,7-12<br>7-12<br>2-6 |
| X<br>Y<br>A | JP 2007-538168 A (Koninklijke Philips Electronics N.V.), 27 December 2007 (27.12.2007), claims; paragraphs [0001], [0008] to [0017], [0065] to [0069] & US 2007/0215836 A1 claims; paragraphs [0001], [0008] to [0017], [0076] to [0080] & WO 2005/113867 A1 & EP 1753901 A1 & KR 10-2007-0013307 A & CN 1954102 A | 1,7,8,10,11<br>7-12<br>2-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 August 2016 (26.08.16) | 06 September 2016 (06.09.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

INTERNATIONAL SEARCH REPORT

International application No.
PCT/JP2016/068536

C (Continuation). DOCUMENTS CONSIDERED TO BE RELEVANT

| Category* | Citation of document, with indication, where appropriate, of the relevant passages | Relevant to claim No. |
|---|---|---|
| A | JP 63-051413 A (Bayer AG.), 04 March 1988 (04.03.1988), entire text & US 4791187 A & EP 256470 A2 | 1-12 |
| A | JP 2000-281743 A (Asai Shokusan Yugen Kaisha), 10 October 2000 (10.10.2000), entire text (Family: none) | 1-12 |
| A | JP 07-292062 A (Toyobo Co., Ltd.), 07 November 1995 (07.11.1995), entire text (Family: none) | 1-12 |
| A | JP 05-195322 A (Toyobo Co., Ltd.), 03 August 1993 (03.08.1993), entire text (Family: none) | 1-12 |
| A | CN 103087296 A (Fudan University), 08 May 2013 (08.05.2013), entire text (Family: none) | 1-12 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009167584 A
- JP 2010084301 A
- JP 2013082804 A